# EUROPEAN PATENT APPLICATION

(11) **EP 3 067 734 A1**
(43) Date of publication of application: **14.09.2016**
(21) Application number: 15158920.7
(22) Date of filing: 13.03.2015
(51) Int. Cl.: G02C 5/22

(54) **Automatically openable elastic spectacles leg**

(71) Applicant: Go Eyewear, SA, 1679-012 Pontinha (PT)
(72) Inventor: WANG, Xiaoyan, Wenzhou city 325041 Zhejiang province (CN)
(74) Representative: Engelhard, Markus

(57) **Abstract**

An automatically openable elastic spectacles leg, comprising a front hinge joint and a leg body, the front hinge joint and the leg body being moveably connected; an inner hole is disposed inside the leg body, the inner hole containing a long spring and a piston which are disposed in an order from inside outwards; the piston has one end thereof butt the long spring and the other end configured to be arc-shaped to butt the front hinge joint; a surface of the front hinge joint which butts the piston is arc-shaped and bulges towards the leg body. A through hole is provided on the front hinge joint and a threaded hole is provided on the leg body, the front hinge joint being moveably connected with the leg body by a screw which penetrates through the through hole and the threaded hole; a counter-bored hole is provided on the front hinge joint at an end proximate to a head of the screw, a short spring is disposed in the counter-bored hole, the short spring being compressed between the head of the screw and the front hinge joint. The present invention is advantageous in that the long spring acts on the piston to generate a force which is then applied onto the arc-shaped surface causing the spectacles leg to open automatically and that it can be readily assembled and is practical; in addition, the opening speed of spectacles legs can be freely adjusted with the aid of the short spring.

## Description

### Technical Field

The present invention relates to spectacles technology field, and more particularly, to an automatically openable elastic spectacles leg.

### Description of Related Art

A pair of spectacles generally consists of a spectacles frame, spectacles legs and spectacles lens, capable of correcting visual acuity or protecting one's eyes. Given the increased number of shortsighted persons and popularity of a variety of decorative spectacles, spectacles have become a necessity of life for many people. Therefore, people are now in need of spectacles that are more aesthetic and can be worn more conveniently and comfortably.

For the spectacles commercially available today, spectacles frames are generally connected with spectacles legs by means of hinge screws. The spectacles legs are generally rod shaped, most of which are made from plastic materials, metal materials or sheet materials. Spectacles legs usually serve to cooperate with nose pads to fix spectacles.

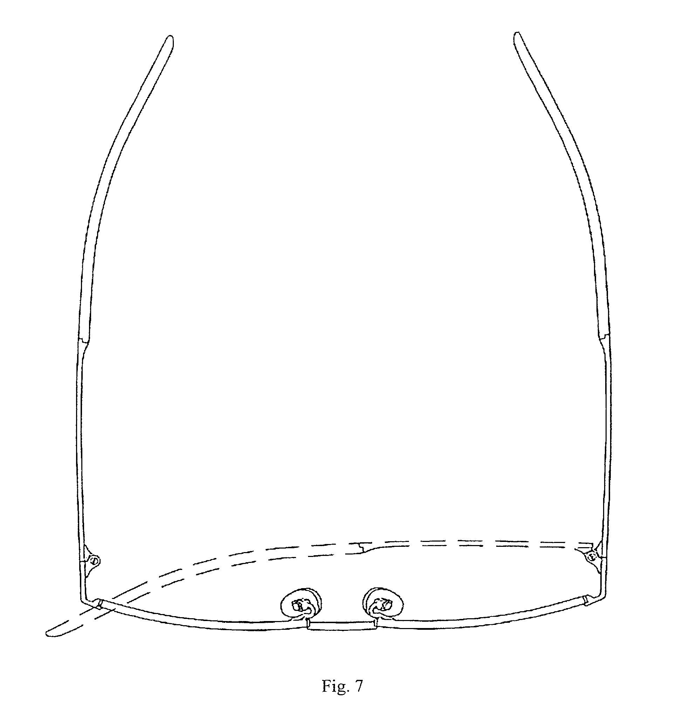

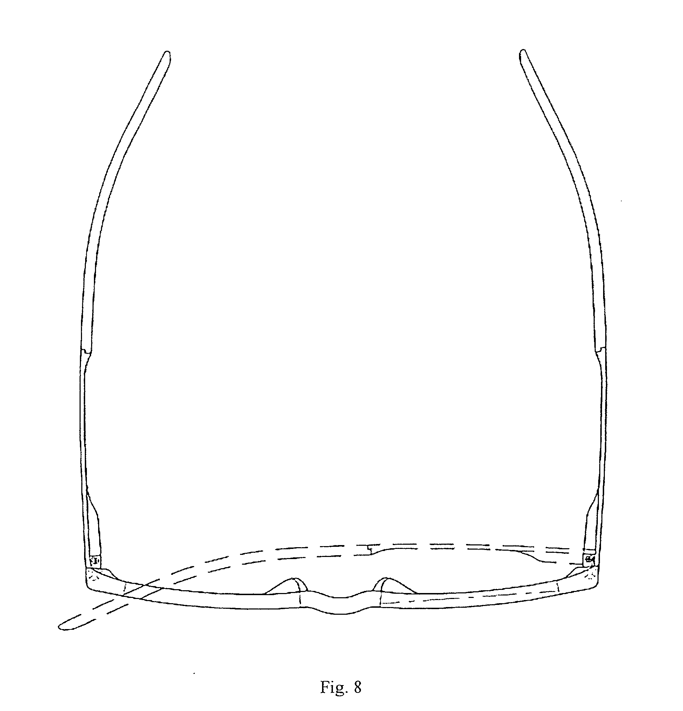

The prior-art spectacles legs are configured such that when spectacles are worn, the user has to open the left and right legs manually with hands, and when spectacles are taken off, the user has to close the legs manually with hands as well before placing the spectacles into a spectacles case. This operation manner is disadvantageous in that the opening and closing of spectacles are troublesome and inconvenient. This is especially the case when a user is busy with other actions such that no hand is available to open spectacles legs and the use of spectacles becomes extremely inconvenient. Figs 7 and 8 illustrate the configuration and opening manner of the prior-art spectacles legs.

### Brief Summary of the Invention

The objective of the present invention is to provide an automatically openable elastic spectacles leg which is simple in structure, can be fabricated and assembled conveniently and has satisfactory safety so as to eliminate the inconvenience with wearing the prior-art spectacles legs.

To achieve the objective described above, the present invention employs the technical solutions below:
An automatically openable elastic spectacles leg, comprising a front hinge joint and a leg body, the front hinge joint and the leg body being moveably connected; an inner hole is disposed inside the leg body, the inner hole containing a long spring and a piston which are disposed in an order from inside outwards; the piston has one end thereof butt the long spring and the other end configured to be arc-shaped to butt the front hinge joint; a surface of the front hinge joint which butts the piston is arc-shaped and bulges towards the leg body.

As an improvement to the present invention, the arc-shaped surface is provided with a locating slot which is recessed towards an opposite direction, the locating slot cooperates with the arc-shaped end of the piston such that when a spectacles leg is fully opened the leg body is trapped into the locating slot.

As an improvement to the present invention, a through hole is provided on the front hinge joint and a threaded hole is disposed on the leg body, the front hinge joint being moveably connected with the leg body by a screw which penetrates through the through hole and the threaded hole; a counter-bored hole is provided on the front hinge joint, a short spring is disposed in the counter-bored hole, the short spring being compressed between a head of the screw and the front hinge joint.

As an improvement to the present invention, the arc-shaped surface on the front hinge joint which bulges towards the leg body is a circular arc-shaped surface.

As an improvement to the present invention, the arc-shaped end of the piston is a circular arc-shaped surface.

The advantageous effects of the present invention are as follows:
As compared with the prior art, the present invention is advantageous in that the long spring acts on the piston to generate a force which is then applied onto the arc-shaped surface causing a spectacles leg to open automatically and that it can be readily assembled and is practical. In addition, the opening speed of spectacles legs can be freely adjusted with the aid of the short spring.

### Brief Description of the Several Views of the Drawings

Fig.1 is an exploded structural schematic view along a horizontal direction of the present invention;
Fig.2 is exploded structural schematic view along a vertical direction of the present invention;
Fig.3 is a structural schematic view along a horizontal direction of the present invention after being assembled;
Fig.4 is a structural schematic view along a vertical direction of the present invention after being assembled;
Fig.5 is a schematic view depicting an automatic opening process of embodiment 1 of the present invention;
Fig.6 is a schematic view depicting an automatic opening process of embodiment 2 of the present invention;
Fig.7 is a schematic view depicting an automatic opening process of example 1 of a prior-art spectacles leg; and
Fig.8 is a schematic view depicting an automatic opening process of example 2 of a prior-art spectacles leg;

In these figures, the reference numeral 1 identifies a front hinge joint, 2 a short spring, 3 a piston, 4 a long spring, 5 a screw, 6 a leg body, 7 an inner hole, 8 an arc-shaped surface, 9 a through hole, 10 a short spring seat, 11 a counter-bored hole, 12 a threaded hole, 13 an open slot, 14 a locating slot, 15 a connecting piece and 16 a threaded counter-bored hole.

### Detailed Description of the Invention

The present invention will be explained in greater detail below with reference to the attached drawings.

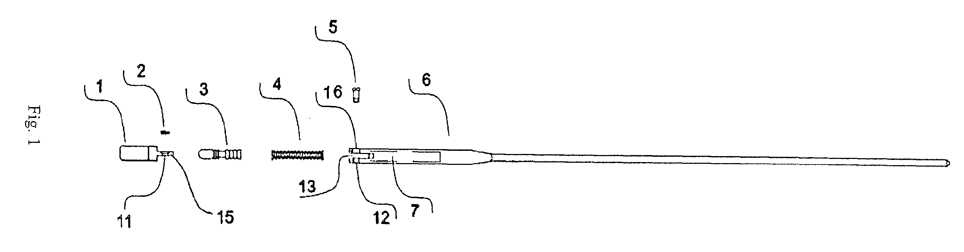

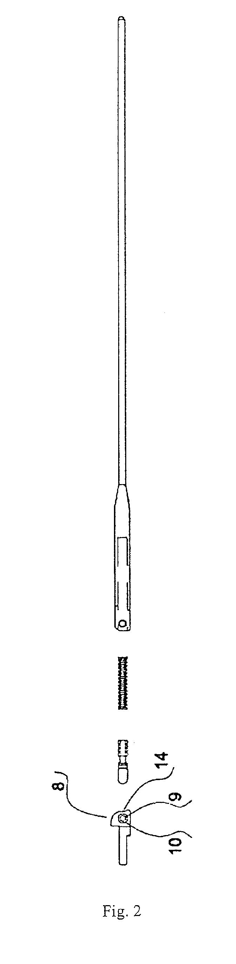

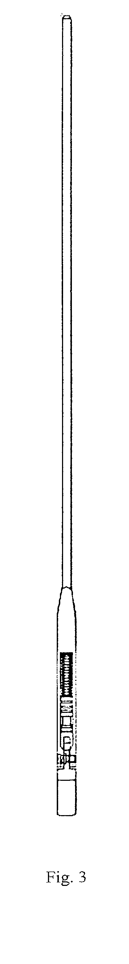

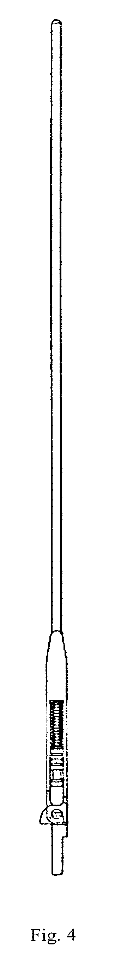

Figs.1 and 2 depict exploded structural schematic views of the present invention and Figs.3 and 4 depict structural schematic views of the present invention after being assembled.

An automatically openable elastic spectacles leg disclosed in the present invention comprises a front hinge joint 1 and a leg body 6, the front hinge joint 1 and the leg body 6 being moveably connected; an inner hole 7 is disposed inside the leg body 6, the inner hole 7 containing a long spring 4 and a piston 3 which are disposed in an order from inside outwards; the piston 3 has one end thereof butt the long spring 4 and the other end configured to be arc-shaped to butt the front hinge joint 1; a surface of the front hinge joint 1 which butts the piston 3 is arc-shaped and bulges towards the leg body 6. Between the front hinge joint 1 and the leg body 6, the long spring 4 drives the piston 3 to apply a force onto a stress point on the arc-shaped surface 8, thereby achieving the effect of automatic opening.

Preferably, the arc-shaped surface 8 is provided with a locating slot 14 which is recessed towards an opposite direction, the locating slot 14 cooperates with the arc-shaped end of the piston 3 such that when the spectacles leg is fully opened the leg body 6 is trapped into the locating slot 14. The long spring 4 drives the piston 3 to apply a force onto the arc-shaped surface 8 of the front hinge joint 1 thereby causing the spectacles leg to open automatically and become trapped into the locating slot 14.

Preferably, an open slot 13 is provided on a front end of the leg body 6, a connecting piece 15 is disposed on the front hinge joint 1 and an arc-shaped surface 8 is provided on the connecting piece 15. A through hole 9 is provided on the connecting piece 15 and a threaded hole 12 is provided on the leg body 6. Once the connecting piece 15 is inserted into the open slot 13, the front hinge joint 1 and the leg body 6 are moveably connected using a screw 5 which penetrates through the through hole 9 and the threaded hole 12. A counter-bored hole 11 is provided on the front hinge joint 1 and a short spring is disposed therein and is compressed between a head of the screw 5 and the front hinge joint 1. A threaded counter-bored hole 16 may be provided on the leg body at an end proximate to the head of the screw 5 such that the head of the screw 5 is concealed into the leg body 6 rather than protrudes outside the leg body 6. The displacement of the leg body 6 relative to the front hinge joint 1 occurs in such a manner that the arc-shaped surface 8 rotates horizontally about the screw 5 and is ultimately trapped into the locating slot 14. During this process, the screw 6 compresses the short spring 2 and, as a result, the frictional force between the leg body 6 and the front hinge joint 1 increases under the effect of an elastic force generated by the short spring 2. In this way, the screw 5 compressing the short spring 2 plays the role of a buffer causing the leg body 6 to open stably and slowly.

Preferably, the arc-shaped surface 8 on the front hinge joint 1 which bulges towards the leg body 6 is a circular arc-shaped surface and the arc-shaped end of the piston 3 is a circular arc-shaped surface as well.

As compared with the prior art, the present invention is advantageous in that the long spring acts on the piston to generate a force which is then applied onto the arc-shaped surface causing a spectacles leg to open automatically and that it can readily assembled and is practical. In addition, the opening speed of spectacles legs can be freely adjusted with the aid of the short spring.

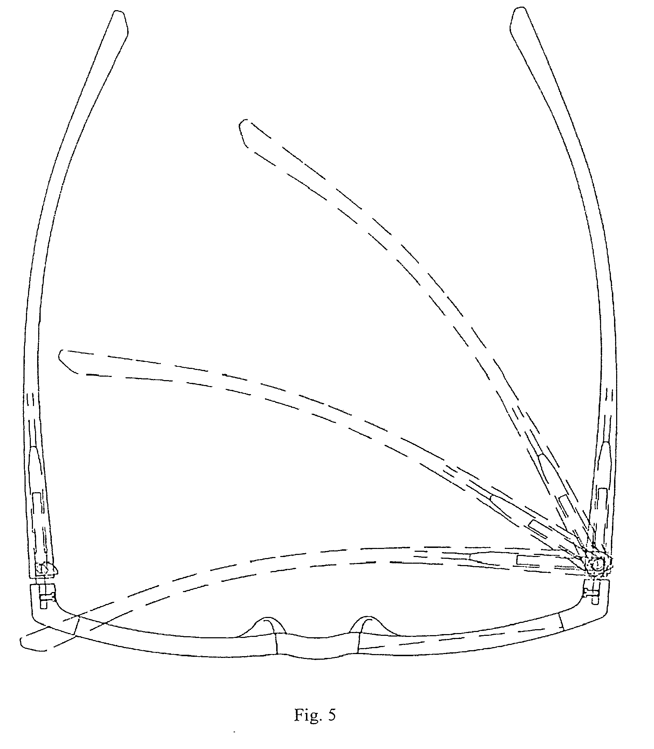

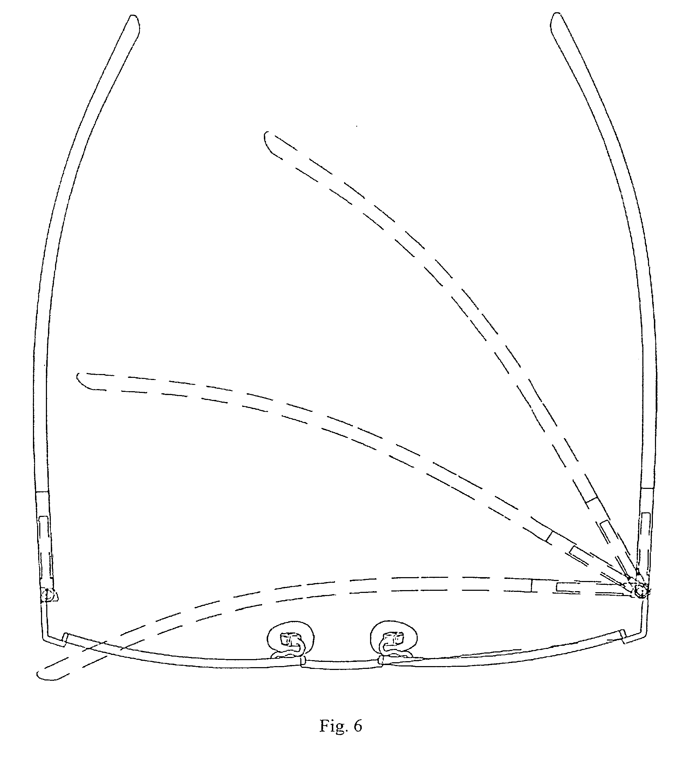

As shown in Figs.5 and 6, a leg body is opened slowly along a horizontal direction and is ultimately trapped into the locating slot. The structure of the present invention may be assembled into spectacles made from sheet materials, TR, PC, metal materials, bamboo and wooden materials etc.

The assembly process of the present invention is as follows:
1. Fabricate the front hinge joint into a shape of the front hinge joint 1 as shown in Figs.1 and 2. Make a through hole into the connecting piece 15 of the front hinge joint 1 and fabricate a short spring seat 10. Place the short spring 2 into the short spring seat 10.
2. Fabricate the leg body 6 into a shape as shown in Figs.1 and 2. Make the inner hole 7 in the leg body 6. Make the open slot 13 at the opening of the inner hole 7. Make the threaded hole 12 and the threaded counter-bored hole 16 on a wall of the open slot 13.
3. Place the long spring 4 into the inner hole of the leg body 6 and then place the piston 3. Take care to distinguish between the front and rear end of the piston. To allow sufficient flexibility of the piston 3 and the long spring 4, they shall be assembled in such a way that ensures they are able to slide easily.
4. Insert the connecting piece 15 of the front hinge joint 8 into the open slot 13 of the leg body 6 and then fasten it with the screw 5. The screw 5 compresses the short spring 2 to match the force applied by the long spring 4 thereby achieving the desired effect.

From the above it can be concluded that the automatically openable elastic spectacles leg disclosed in the present invention has overcome the drawback in the structure of prior-art spectacles legs that they have to be opened with hands and can meet the demand for good portability of spectacles. The automatically openable elastic spectacles leg disclosed in the present invention comprises a front hinge joint, a spectacles leg body, a one-fourth arc portion of the front hinge joint, a short spring, a piston, a long spring and a shoulder screw. A force generated by the long spring drives the piston to move thereby causing the spectacles leg to automatically open slowly under the damping effect of the short spring, thus achieving the goal that a person can wear a pair of spectacles conveniently without the aid of hands.

It is to be understood that the disclosed embodiments are intended to be merely examples rather than to limit the scope of the invention. Any modifications, equivalent replacements and improvements made within the spirit and philosophy of the present invention are covered by the appended claims.

## Claims

1. An automatically openable elastic spectacles leg, comprising a front hinge joint (1) and a leg body (6), the front hinge joint (1) and the leg body (6) being moveably connected, **characterized in that** an inner hole (7) is disposed inside the leg body (6), the inner hole (7) containing a long spring (4) and a piston (3) which are disposed in an order from inside outwards; the piston (3) has one end thereof butt the long spring (4) and the other end configured to be arc-shaped to butt the front hinge joint (1); a surface of the front hinge joint (1) which butts the piston (3) is an arc-shaped surface (8) that bulges towards the leg body (6).

2. The automatically openable elastic spectacles leg as claimed in claim 1, wherein the arc-shaped surface (8) is provided with a locating slot (14) which is recessed towards an opposite direction, the locating slot (14) cooperates with the arc-shaped end of the piston (3) such that when the spectacles leg is fully opened the leg body (6) is trapped into the locating slot (14).

3. The automatically openable elastic spectacles leg as claimed in claim 1 or 2, wherein a through hole (9) is provided on the front hinge joint (1) and a threaded hole (12) is provided on the leg body (6), the front hinge joint (1) and the leg body (6) being moveably connected using a screw (5) which penetrates through the through hole (9) and the threaded hole (12); a counter-bored hole (11) is provided on the front hinge joint (1) and a short spring (2) is disposed therein and is compressed between a head of the screw (5) and the front hinge joint (1).

4. The automatically openable elastic spectacles leg as claimed in claim 1 or 2, wherein the arc-shaped surface (8) on the front hinge joint (1) which bulges towards the leg body (6) is a circular arc-shaped surface.

5. The automatically openable elastic spectacles leg as claimed in claim 1 or 2, wherein the arc-shaped end of the piston (3) is a circular arc-shaped surface.
